# EUROPEAN PATENT APPLICATION

(11) **EP 3 919 553 A1**
(43) Date of publication of application: **08.12.2021**
(21) Application number: 19912597.2
(22) Date of filing: 17.10.2019
(51) Int. Cl.: C08J 9/22, B29C 44/34

(54) **FOAMED PARTICLE DEHYDRATION DEVICE AND DEHYDRATION METHOD, AND USE THEREOF**

(30) Priority: 31.01.2019 JP 2019015427; 11.07.2019 JP 2019129390
(71) Applicant: Kaneka Corporation, Osaka-shi, Osaka 530-8288 (JP)
(72) Inventor: EBISUI, Masahide, Settsu-shi, Osaka 566-0072 (JP)
(74) Representative: Vossius & Partner Patentanwälte Rechtsanwälte mbB
(86) International application number: PCT/JP2019/040816
(87) International publication number: WO 2020/158061

(57) **Abstract**

In order to enable dehydration of a slurry of expanded particles with a simple structure, a dehydration device (10) of this invention includes: a transporting tube (1) configured to transport a liquid mixture of expanded particles (5), the transporting tube (1) having a curved part (2) in which the transporting tube (1) is curved; and a mesh member (3) provided to the curved part (2) of the transporting tube (1), the mesh member (3) being configured to separate the expanded particles (5) and a liquid component in the liquid mixture from each other.

## Description

### Technical Field

The present invention relates to a foamed particle (expanded particle) dehydration device and a dehydration method, and use thereof.

### Background Art

It is known that expanded particles made of a thermoplastic resin are produced by a pressure-release expansion method. According to the pressure-release expansion method, in a pressure-resistant vessel, thermoplastic resin particles are first dispersed in water containing a dispersion agent, and then a volatile blowing agent is added thereto. Thereafter, a resultant is maintained at high temperature under high pressure, so that the volatile blowing agent is impregnated therein. Then, the resin particles containing the volatile blowing agent impregnated therein are released to a low pressure atmosphere. One example of the expanded particle production method employing the pressure-release expansion method is the technique disclosed in Patent Literature 1.

According to the pressure-release expansion method that uses water as a dispersion medium, the expanded particles obtained after being released to the low pressure atmosphere is in a state where the expanded particles are mixed with water (slurry). Thus, in order to obtain the expanded particles, it is necessary to carry out a dehydration step of removing a liquid component from the expanded particles that is in the slurry state and a drying step of drying the expanded particles thus dehydrated.

The expanded particles in the slurry state are dehydrated with, e.g., a centrifugal dehydrator including a cylindrical screen in which a rotary rotor with a propeller blade is provided.

### Citation List

### [Patent Literature]

[Patent Literature 1]
International Publication No. WO 2006/046685

### Summary of Invention

### Technical Problem

However, the above-described method for dehydrating the expanded particles requires a transporting tube that is connected to the centrifugal dehydrator. Consequently, the conventional dehydration technique for dehydrating the expanded particles still has problems such as an increase in the size of the centrifugal dehydrator, difficulty in setting the temperature of a particle transporting atmosphere high, and necessities for safety measures and maintenance on the rotary movable part of the centrifugal dehydrator. Thus, the conventional technique has some room for improvements in terms of the increase in the size of the production device of the expanded particles and the complicated structure.

An aspect of the present invention has an object to provide: a dehydration device and a dehydration method each capable of dehydrating expanded particles with a simple structure; and a use thereof.

### Solution to Problem

In order to attain the object, a dehydration device for dehydrating expanded particles in accordance with an aspect of the present invention includes: a transporting tube configured to transport a liquid mixture of expanded particles, the transporting tube having at least one curved part in which the transporting tube is curved; and a separating member provided to the at least one curved part of the transporting tube, the separating member being configured to separate the expanded particles and a liquid component in the liquid mixture from each other.

In order to attain the object, a method for dehydrating expanded particles in accordance with an aspect of the present invention for includes the steps of: setting a separating member to at least one curved part of a transporting tube, which is curved at the at least one curved part; and causing a liquid mixture of expanded particles to collide with the at least one curved part so that the expanded particles and a liquid component in the liquid mixture are separated from each other. Advantageous Effects of Invention

In accordance with an aspect of the present invention, it is possible to dehydrate a slurry of expanded particles with a simple structure, without use of a centrifuge including a rotary movable part.

### Brief Description of Drawings

Fig. 1 schematically illustrates a configuration of a dehydration device for dehydrating expanded particles in accordance with Embodiment 1 of the present invention. In Fig. 1, the part indicated by 1001 is an elevational view, and the part indicated by 1002 is a cross-sectional view.
Fig. 2 is a cross-sectional view for explaining a method for dehydrating expanded particles with use of the dehydration device in accordance with Embodiment 1 of the present invention.
Fig. 3 is a perspective view schematically illustrating a configuration of a dehydration device for dehydrating expanded particles in accordance with Embodiment 2 of the present invention.
Fig. 4 is a cross-sectional view schematically illustrating a configuration of a dehydration device for dehydrating expanded particles in accordance with Embodiment 3 of the present invention.
Fig. 5 is a cross-sectional view schematically illustrating a configuration of a dehydration device for dehydrating expanded particles in accordance with Embodiment 4 of the present invention.
Fig. 6 is a view schematically illustrating a configuration of a device for producing expanded particles employed in Embodiments 1 to 4 of the present invention.
Fig. 7 is a view schematically illustrating a configuration of another device for producing expanded particles employed in Embodiments 1 to 4 of the present invention.

### Description of Embodiments

### [Embodiment 1]

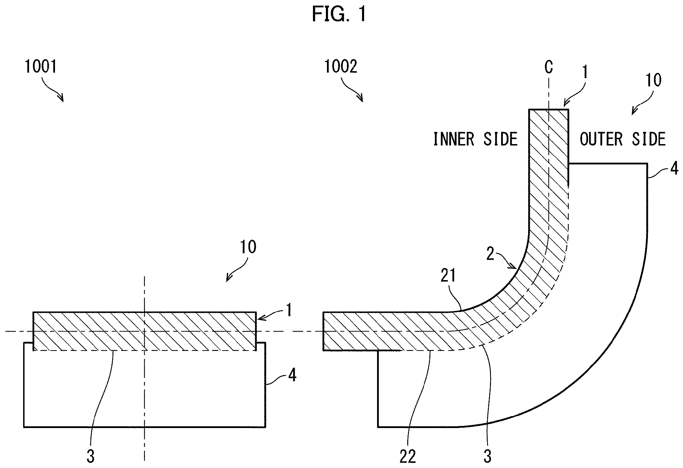

The following will describe details of an embodiment of the present invention. Fig. 1 schematically illustrates a configuration of a dehydration device 10 for dehydrating expanded particles in accordance with Embodiment 1 of the present invention. In Fig. 1, the part indicated by 1001 is an elevational view, and the part indicated by 1002 is a cross-sectional view.

As indicated by 1001 and 1002 in Fig. 1, the dehydration device 10 in accordance with Embodiment 1 includes a transporting tube 1 that is curved and a draining part 4. The transporting tube 1 is a tube configured to transport a liquid mixture of expanded particles. The expanded particles obtained by the pressure-release expansion method are in a state (slurry) where the expanded particles are mixed with a liquid component. That is, the expanded particles obtained by the pressure-release expansion method are a liquid mixture.

The transporting tube 1 has a curved part 2 where the transporting tube 1 is curved at 90° in an arc shape. Here, relative to a center axis C of a part of the transporting tube 1 which part does not include the curved part 2, a side toward which the curved part 2 is curved is defined as being inward (or an inner side), and a side opposite to the inner side is defined as being outward (or an outer side). The curved part 2 has an inner side wall 21 and an outer side wall 22.

Of the inner side wall 21 and the outer side wall 22 of the curved part 2, the outer side wall 22 is provided with a mesh member 3. The space inside the transporting tube 1 communicates with a space outside the transporting tube 1 via the mesh member 3. The location of the mesh member 3 is not limited to the outer side wall 22. The mesh member 3 only needs to be provided to a side wall of the curved part 2. In the configuration shown in Fig. 1, the mesh member 3 constitutes a part of the outer side wall 22.

The mesh member 3 works as a separating member for separating the expanded particles and the liquid component in the liquid mixture from each other. For example, the mesh member 3 only needs to be a mesh-like member having openings smaller in size than the expanded particles. The structure and material of the mesh member 3 are not limited to any particular ones. Preferably, the mesh member 3 is a metal mesh. The size of each of the openings of the mesh member 3 can be appropriately set according to the size of the expanded particles passing through the transporting tube 1. The separating member employed in Embodiment 1 only needs to have a plurality of openings smaller in size than the expanded particles. In place of the mesh member 3, a lattice-shaped member (including a lattice having stripes laid only in one direction, i.e., only in a lateral direction or only in a vertical direction) or a plate-shaped member having small holes may be used as the separating member.

The dehydration device 10 includes a draining part 4 adjacent at least to the outer side wall 22 of the curved part 2 in the transporting tube 1. The draining part 4 is a member which has a space for storing the liquid component separated by the mesh member 3 and through which the liquid component is discharged to the outside of the transporting tube 1. The space inside the draining part 4 communicates with the space inside the transporting tube 1 via the mesh member 3. The dehydration device 10 is configured such that the draining part 4 is connectable to, e.g., draining piping and the liquid component separated by the mesh member 3 is discharged to the outside of the transporting tube 1 through the draining piping connected to the draining part 4.

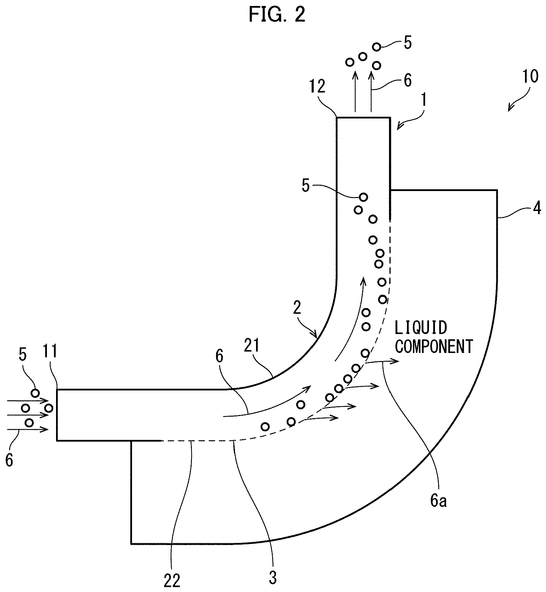

Fig. 2 is a cross-sectional view for explaining a method for dehydrating the expanded particles with use of the dehydration device 10. As shown in Fig. 2, the dehydration method in accordance with Embodiment 1 causes a slurry of expanded particles 5 (liquid mixture) to collide with the mesh member 3, which is disposed in the curved part 2 of the curved transporting tube 1, so that the expanded particles 5 and the liquid component in the slurry are separated from each other.

The slurry containing the expanded particles 5 enters, together with air 6, the transporting tube 1 through an inlet 11. The air 6 is an air stream generated by, e.g., a blower (not illustrated) to send, to the next step, the expanded particles 5 obtained by the pressure-release expansion method. The slurry of the expanded particles 5 flows along with the air 6 in the transporting tube 1. While coming in contact with or colliding with the side wall of the curved part 2, the slurry of the expanded particles 5 passes through the transporting tube 1 and is discharged from an outlet 12. While the air 6 is passing through the transporting tube 1, diverged air 6a, which flows from the openings of the mesh member 3 toward the draining part 4, is generated from the air 6. As a result of contact or collision of the slurry of the expanded particles 5 with the side wall of the curved part 2, the liquid component is separated from the slurry of the expanded particles 5. While coming in contact with or colliding with the side wall of the curved part 2, the slurry of the expanded particle 5 flows along the curved part 2. During this, an outward centrifugal force is applied to the slurry of the expanded particles 5. Also by the centrifugal force, the liquid component is separated from the slurry of the expanded particles 5. The expanded particles 5 from which the liquid component has been separated by contact or collision with the side wall of the curved part 2 and the centrifugal force in this manner move along with the flow of the air 6, and are discharged to the outside of the transporting tube 1 through the outlet 12. Meanwhile, the liquid component separated from the expanded particles 5 moves, along with the diverged air 6a, to the draining part 4 outside the transporting tube 1 through the openings of the mesh member 3, and is then discharged from the draining part 4 to the outside of the dehydration device 10.

The shape of the side wall of the curved part 2 is not limited to any particular one, provided that it is a shape providing the above-described effect of separating the liquid component by the contact or collision or the above-described effect of separating the liquid component by the centrifugal force. Preferably, the side wall of the curved part 2 has a curved surface or an arc surface. With the configuration in which the side wall of the curved part 2 has a curved surface or an arc surface, it is possible to enhance not only the effect of separating the liquid component by the contact or collision but also the effect of separating the liquid component by the centrifugal force. This can enhance the dehydration effect of the expanded particles 5.

As described above, with the configuration in accordance with Embodiment 1 in which the mesh member 3, which communicates with the space (draining part 4) outside the transporting tube 1, is provided to the outer side wall 22 of the curved part 2 of the transporting tube 1 for transporting the slurry of the expanded particles 5, dehydration of the expanded particles 5 is enabled. Thus, in accordance with Embodiment 1, the structure (curved part 2) of the transporting tube 1 itself can be used to dehydrate the expanded particles 5. Therefore, it is possible to separate, in the transporting tube 1, the liquid component from the expanded particles 5 just after being produced by the pressure-release expansion method and to send the expanded particles 5 to the next step. Thus, as compared to the conventional techniques for dehydrating the expanded particles with the centrifuge, the configuration of Embodiment 1 can dehydrate the expanded particles 5 with a simpler structure, without complicating the structure of the production device for producing the expanded particles 5.

In a case where the production method for producing the expanded particles with use of the pressure-release expansion method employs a combustible gas as a volatile blowing agent or expands thermoplastic resin particles in a high-temperature steam atmosphere, it is necessary to carry out the expanding step, the dehydration step, and the drying step in a closed system, from the viewpoints of safety and energy cost. With the conventional techniques involving use of the centrifuge for dehydration of the expanded particles, the dehydration efficiency of the centrifuge cannot be maintained in a closed circulation system. This is because that it is difficult to secure, with transporting air, a staying time in the centrifugal dehydrator in the closed circulation system. Furthermore, in a case where expanded particles having a relatively high expansion ratio are to be produced with the conventional techniques, it is necessary to increase the capacity of the centrifuge and the size of the movable part in order to dehydrate the expanded particles, which leads to high energy cost and high maintenance cost.

Meanwhile, in accordance with Embodiment 1, the expanded particles 5 are dehydrated in the transporting tube 1 by making use of the air 6, which is for sending the expanded particles 5 to the next step. Thus, it is possible to carry out the dehydration process even in a closed system and also to avoid an increase in the size of the dehydration device 10 even in a case where expanded particles having a relatively high expansion ratio are to be produced. The dehydration device 10 can be used in a closed circulation system, e.g., by applying a sealing pot thereto by connecting the sealing pot to a draining tube extending from the draining part 4.

In the dehydration device 10 in accordance with Embodiment 1, the occupied area of the mesh member 3 in the outer side wall 22 can be appropriately set according to the desired degree of dehydration of the expanded particles 5. The dehydration device 10 may have a plurality of curved parts 2 each provided with a mesh member 3.

### (1) Shape of dehydration device 10

The transporting tube 1 of the dehydration device 10 preferably has a rectangular cross-sectional shape. The transporting tube 1 has a height that can be appropriately set according to the type of the expanded particles 5 and/or the like within a range with which the transporting tube 1 is not clogged with the expanded particles 5. The transporting tube 1 has a width that can be appropriately set according to the type of the expanded particles 5 and/or the like so as to facilitate spreading of the expanded particles 5 in the curved part 2 and facilitate contact or collision of the expanded particles 5 with the mesh member 3. In a case where the dehydration device 10 is applied to the production device of the expanded particles, an expansion tube, through which the expanded particles 5 generated by the pressure-release expansion method flow, is connected to the transporting tube 1. The expansion tube typically has a circular cross-sectional shape. Thus, at a part of the expansion tube in which part the expansion tube is connected to the transporting tube 1, the cross-sectional shape of the expansion tube is transformed from the circular shape to the rectangular shape.

### (2) Dehydration conditions of dehydration device 10

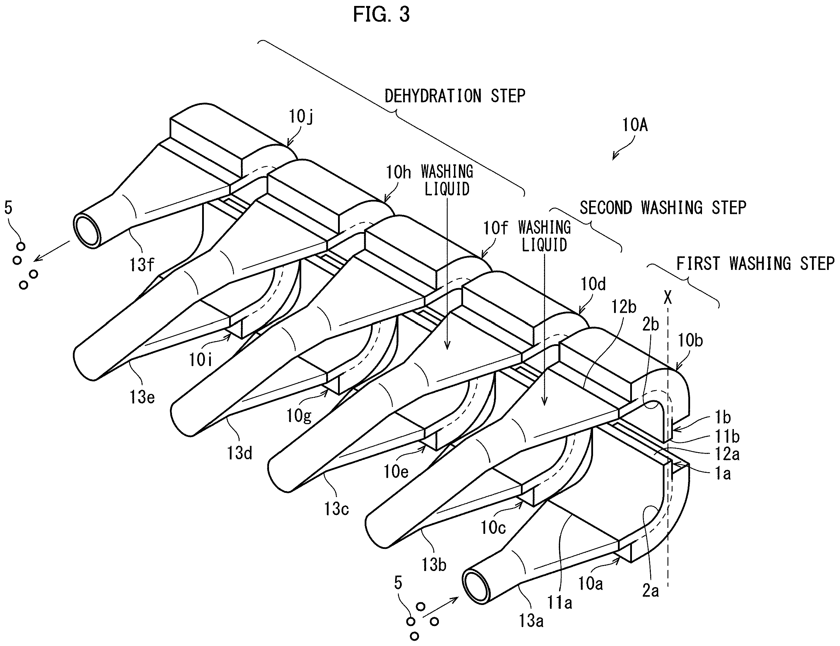

The dehydration conditions for the expanded particles 5 in the dehydration device 10 can be appropriately adjusted by, e.g., adjusting the flow rate of the air 6, the number of curved parts 2, and/or arrangement of a plurality of curved parts 2. For example, the flow rate of the air 6 in the transporting tube 1 is adjusted at an air velocity of 50 m/s to 55 m/s. In addition, at an inlet of the expansion tube (e.g., a connection tube 13a illustrated in Fig. 3, which will be described later) connected to the transporting tube 1, the flow rate of the air is adjusted at an air velocity of 20 m/s to 25 m/s.

The dehydration device 10 may be configured such that the draining tube extending from the draining part 4 is connected to the sealing pot, or may be configured to allow the air 6 having entered the draining part 4 via the mesh member 3 to be discharged to the outside. This can enhance the dehydration efficiency of the expanded particles 5. Particularly, the dehydration device 10 configured to allow the air 6 having entered the draining part 4 via the mesh member 3 to be discharged to the outside provides better dehydration efficiency.

### (3) The number of dehydration devices 10

The dehydration device in accordance with Embodiment 1 may include a plurality of dehydration units connected to each other, each of the dehydration units being constituted by the dehydration device 10 shown in Fig. 1. The number of dehydration units can be appropriately selected. In consideration of the pressure drop of the dehydration device and the size of the blower, the number of dehydration units is preferably not more than six.

### (4) Arrangement of dehydration device 10

The dehydration device 10 may be arranged in any way, provided that the expanded particles 5 can be dehydrated as a result of passing through the curved part 2. For example, the dehydration device 10 may be configured such that (i) the curved part 2 is curved downward relative to the inlet 11 and (ii) the outlet 12 of the transporting tube 1 is positioned lower than the inlet 11 of the transporting tube 1. Alternatively, the dehydration device 10 may be configured such that (i) the curved part 2 is curved upward relative to the inlet 11 and (ii) the outlet 12 of the transporting tube 1 is positioned higher than the inlet 11 of the transporting tube 1. Further alternatively, the dehydration device 10 may be configured such that the curved part 2 is curved laterally.

Of these configurations, the dehydration device 10 is preferably configured such that (i) the curved part 2 is curved upward relative to the inlet 11 and (ii) the outlet 12 of the transporting tube 1 is positioned higher than the inlet 11 of the transporting tube 1. In the dehydration method in accordance with Embodiment 1, the transporting tube 1 is arranged such that (i) the curved part 2 is curved upward starting from the part close to the inlet 11 and (ii) a part of the curved part 2 close to the outlet 11 is disposed higher than the part of the curved part 2 close to the inlet 11, and the slurry of the expanded particles 5 is introduced into the inlet 11. With such a configuration, the air 6 passing through the curved part 2 forms an ascending air stream. Along with the air 6, which forms the ascending air stream, the slurry of the expanded particles 5 having introduced into the inlet 11 flows upward through the transporting tube 1 while coming in contact with or colliding with the side wall of the curved part 2, and then is be discharged from the outlet 12. Here, in the slurry, the expanded particles 5 have a lower specific gravity than that of the liquid component. Thus, in the slurry of the expanded particles 5 flowing upward along with the air 6, the expanded particles 5 travel upward, whereas the liquid component separated from the expanded particles as a result of collision or contact tends to fall due to the gravity force. In this manner, as a result of upward movement of the slurry of the expanded particles 5 along with the air 6, an effect of separating the expanded particles 5 and the liquid component from each other is attained. Thus, in addition to the liquid component separation effect given as a result of collision or contact of the slurry of the expanded particles 5 with the side wall of the curved part 2 and the liquid component separation effect obtained by the centrifugal force, the liquid component separation effect obtained as a result of upward movement of the slurry of the expanded particles 5 along with air 6 is given to the slurry of the expanded particles 5. This facilitates separation of the expanded particles 5 and the liquid component from each other.

### (5) Arrangement system of dehydration device 10

A configuration of an arrangement system of the plurality of dehydration units each constituted by the dehydration device 10 shown in Fig. 1 is not limited to any particular one. For example, dehydration devices in accordance with Embodiments 2 to 4, which will be described later, are given as examples.

In addition, the dehydration device 10 in accordance with Embodiment 1 can be configured to be capable of carrying out a washing step of washing the expanded particles 5. This can enhance the washing efficiency of the expanded particles 5.

Note that, among the dehydration devices in accordance with Embodiments 2 to 4 (described later), the dehydration device in accordance with Embodiment 2 is preferable from the viewpoints of compactness and favorable serviceability of the device equipment. From the viewpoints of a minimum number of pieces of connection piping and a minimum pressure loss, the dehydration device in accordance with Embodiment 3 is preferable. From the viewpoints of space saving and washing performance, the dehydration device in accordance with Embodiment 4 is preferable.

### [Embodiment 2]

The following will describe details of another embodiment of the present invention. For convenience of description, members having functions identical to those described in Embodiment 1 are assigned identical referential numerals, and their descriptions are omitted here. Fig. 3 is a perspective view schematically illustrating a configuration of a dehydration device 10A for dehydrating expanded particles in accordance with Embodiment 2.

The dehydration device 10A in accordance with Embodiment 2 includes a plurality of curved parts each provided with a mesh member, and is configured to be capable of carrying out a washing step of washing expanded particles 5. As shown in Fig. 3, the dehydration device 10A includes dehydration units 10a to 10j. Each of the dehydration units 10a to 10j has a configuration identical to that of the dehydration device 10 shown in Figs. 1 and 2, and therefore explanations thereof is omitted here.

In the dehydration device 10A, the dehydration units 10a to 10j are arranged so that each of the curved parts of the dehydration units 10a to 10j constitutes a part of a spiral shape. More specifically, as shown in Fig. 3, the dehydration units 10a, 10c, 10e, 10g, and 10i are arranged in this order so that the curved parts of these dehydration units are aligned in parallel along one direction. In addition, the dehydration units 10b, 10d, 10f, 10h, and 10j are arranged above the dehydration units 10a, 10c, 10e, 10g, and 10i, respectively.

The dehydration units 10a, 10c, 10e, 10g, and 10i include transporting tubes having the curved parts that are curved toward the same side. The dehydration units 10b, 10d, 10f, 10h, and 10j include transporting tubes having the curved parts that are curved toward the same side.

In the dehydration unit 10a, the transporting tube 1a has an inlet 11a facing laterally. In addition, the curved part 2a has a part extending laterally from a part close to the inlet 11a, followed by a part curved upward. The transporting tube 1a has an outlet 12a facing upward. In the dehydration unit 10b, the transporting tube 1b has an inlet 11b facing upward so as to face the outlet 12a of the transporting tube 1a. The curved part 2b has a part extending upward from a part close to the inlet 11b, followed by a part curved laterally. The transporting tube 1b has an outlet 12b facing laterally. The curved part 2b is curved toward the same side as the curved part 2a. That is, the curved parts 2a and 2b are arranged so that the inner sides of the curved parts 2a and 2b are disposed on the same side and the outer sides of the curved parts 2a and 2b are disposed on the same side. In other words, the dehydration units 10a and 10b are arranged in a positional relation in which the transporting tube 1a including the curved part 2a and the transporting tube 1b including the curved part 2b forms a U-shape.

Here, an arrangement unit in which the inlet 11a of the transporting tube 1a of the dehydration unit 10a disposed on the lower side and the outlet 12b of the transporting tube 1b of the dehydration unit 10b disposed on the upper side are located on the same side relative to a center axis X of the transporting tubes 1a and 1b is referred to as a "cis-arrangement unit", the center axis X extending in an up-down direction (vertical direction). The cis-arrangement unit may be, for example, a unit including dehydration units arranged in a positional relation identical to that of the dehydration units 10a and 10b. Meanwhile, an arrangement unit arranged in a reverse manner to the cis-arrangement unit, that is, an arrangement unit in which an inlet of a transporting tube of a dehydration unit disposed on the lower side and an outlet of a transporting tube of a dehydration unit disposed on the upper side are located on opposite sides across a center axis of the transporting tubes is referred to as a "trans-arrangement unit", the center axis extending in the vertical direction.

The dehydration units 10c, 10e, 10g, and 10i are respectively arranged relative to the dehydration units 10d, 10f, 10h, and 10j in a cis-arrangement positional relation, which is identical to the positional relation between the dehydration units 10a and 10b, and therefore an explanation thereof is omitted here.

The dehydration device 10A in accordance with Embodiment 2 can be expressed as a configuration in which cis-arrangement units each constituted by two dehydration units are arranged in parallel along a certain direction.

The dehydration device 10A is provided with connection tubes 13a to 13f. The connection tubes 13a to 13f are connected to the dehydration units 10a to 10j so as to form a spiral shape in combination with the dehydration units 10a to 10j. More specifically, the connection tube 13a is connected to the inlet 11a of the transporting tube 1a of the dehydration unit 10a. The connection tube 13b is connected to the outlet 12b of the transporting tube 1b of the dehydration unit 10b and to the inlet of the transporting tube of the dehydration unit 10c. The connection tube 13c is connected to the outlet of the transporting tube of the dehydration unit 10d and to the inlet of the transporting tube of the dehydration unit 10e. The connection tube 13d is connected to the outlet of the transporting tube of the dehydration unit 10f and to the inlet of the transporting tube of the dehydration unit 10g. The connection tube 13e is connected to the outlet of the transporting tube of the dehydration unit 10h and to the inlet of the transporting tube of the dehydration unit 10i. The connection tube 13f is connected to the outlet of the transporting tube of the dehydration unit 10j.

A slurry of the expanded particles 5 enters the connection tube 13a, passes through the dehydration units 10a to 10j and the connection tubes 13b to 13e, and exits from the connection tube 13f. The dehydration device 10A is configured such that the expanded particles 5 are cleaned in two stages and then are dehydrated. More specifically, in the dehydration device 10A, a washing liquid for the expanded particles 5 is introduced into the connection tubes 13b and 13c.

The slurry of the expanded particles 5 enters the dehydration unit 10a. Then, the slurry of the expanded particles passes through the dehydration units 10a and 10b, so that the liquid component is partially removed therefrom. Thereafter, while the slurry of the expanded particles is being cleaned in the connection tube 13b, the slurry of the expanded particles flows to enter the dehydration unit 10c (first washing step). Next, the slurry of the expanded particles 5 passes through the dehydration units 10c and 10d, so that the liquid component is partially removed therefrom. While the slurry of the expanded particles 5 is being cleaned in the connection tube 13c, the slurry of the expanded particles 5 flows to enter the dehydration unit 10e (second washing step).

Thereafter, the slurry of the expanded particles 5 passes through the dehydration units 10e and 10f, the connection tube 13d, the dehydration units 10g and 10h, the connection tube 13e, and the dehydration units 10i and 10j in order. While the slurry of the expanded particles is passing through these members, the liquid component is removed therefrom (dehydration step), and then a resultant is discharged from the connection tube 13f.

The dehydration device 10A in accordance with Embodiment 2 is configured such that each of the curved parts of the dehydration units 10a to 10j constitutes a part of the spiral shape. Thus, the dehydration units 10a to 10j are arranged in a compact manner. The draining parts 4 of the dehydration units 10a to 10j may each be provided with a cleaning port for cleaning the mesh member 3. In this case, with the configuration in which the curved parts of the dehydration units 10a to 10j are arranged to constitute parts of the spiral shape, the cleaning surfaces of the dehydration units 10a to 10j are aligned to face a single plane. Thus, the dehydration device 10A has favorable serviceability.

### [Embodiment 3]

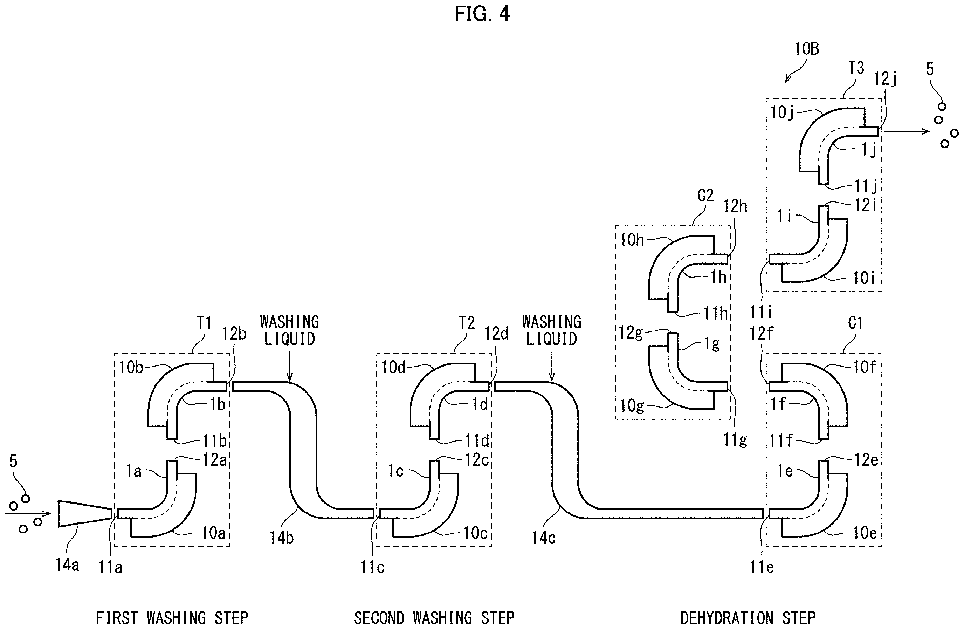

The following will describe another embodiment of the present invention. For convenience of description, members having functions identical to those described in Embodiments 1 and 2 are assigned identical referential numerals, and their descriptions are omitted here. Fig. 4 is a cross-sectional view schematically illustrating a configuration of a dehydration device 10B for dehydrating expanded particles in accordance with Embodiment 3.

The dehydration device 10B in accordance with Embodiment 3 includes three trans-arrangement units each including dehydration units that are trans-arranged. On this point, the dehydration device 10B differs from the dehydration device of Embodiment 2. As shown in Fig. 4, the dehydration device 10B includes trans-arrangement units T1 to T3, cis-arrangement units C1 and C2, and washing tubes 14b and 14c.

The trans-arrangement unit T1 is constituted by dehydration units 10a and 10b. The trans-arrangement unit T2 is constituted by dehydration units 10c and 10d. The trans-arrangement unit T3 is constituted by dehydration units 10i and 10j. The cis-arrangement unit C1 is constituted by dehydration units 10e and 10f. The cis-arrangement unit C2 is constituted by dehydration units 10g and 10h.

In the dehydration device 10B, the trans-arrangement unit T1 is used in a first washing step, and the trans-arrangement unit T2 is used in a second washing step. The cis-arrangement units C1 and C2 and the trans-arrangement unit T3 are used in a dehydration step.

The trans-arrangement unit T1, the trans-arrangement unit T2, and the cis-arrangement unit C1 are disposed at a substantially identical height. The trans-arrangement unit T3 is disposed higher than the cis-arrangement unit C1. The cis-arrangement unit C2 is disposed between the cis-arrangement unit C1 and the trans-arrangement unit T3 in an up-down direction (i.e., a vertical direction). In the vertical direction, an inlet 11g of the cis-arrangement unit C2 is positioned at a location substantially identical to that of an outlet 12f of the cis-arrangement unit C1, and an outlet 12h of the cis-arrangement unit C2 is positioned at a location substantially identical to that of an inlet 11i of the trans-arrangement unit T3.

The washing tube 14b is connected to the outlet 12b of the trans-arrangement unit T1. Via the washing tubes 14b and 14b, the trans-arrangement units T1 and T2 and the cis-arrangement unit C1 are connected in series. More specifically, the washing tube 14b connects an outlet 12b (corresponding to the outlet 12b of the transporting tube 1b of the dehydration unit 10b) of the trans-arrangement unit T1 and an inlet 11c (corresponding to the inlet 11c of the transporting tube 1c of the dehydration unit 10c) of the trans-arrangement unit T2 to each other. The washing tube 14c connects an outlet 12d (corresponding to the outlet 12d of the transporting tube 1d of the dehydration unit 10d) of the trans-arrangement unit T2 and an inlet 11e (corresponding to the inlet 11e of the transporting tube 1e of the dehydration unit 10e) of the cis-arrangement unit C1 to each other.

An outlet 12f (corresponding to the outlet 12f of the transporting tube 1f of the dehydration unit 10f) of the cis-arrangement unit C1 is connected to an inlet 11g (corresponding to the inlet 11g of the transporting tube 1g of the dehydration unit 10g) of the cis-arrangement unit C2 via a non-illustrated connection tube. An outlet 12h (corresponding to the outlet 12h of the transporting tube 1h of the dehydration unit 10h) of the cis-arrangement unit C2 is connected to the inlet 11i of the trans-arrangement unit T3 via a non-illustrated connection tube. The cis-arrangement units C1 and C2 may be directly connected to each other. The cis-arrangement unit C2 and the trans-arrangement unit T3 may be directly connected to each other.

In the dehydration device 10B, a washing liquid for the expanded particles 5 is introduced into the washing tubes 14b and 14c. While being cleaned in the washing tube 14b, the slurry of the expanded particles 5 flows to enter the dehydration unit 10a. Then, the slurry of the expanded particles passes through the trans-arrangement unit T1, so that the liquid component is partially removed therefrom. While being cleaned in the washing tube 14b, the slurry of the expanded particles flows to enter the dehydration unit 10c of the trans-arrangement unit T2 (first washing step). Next, the slurry of the expanded particles 5 passes through the trans-arrangement unit T2, so that the liquid component is partially removed therefrom. While being cleaned in the washing tube 14c, the slurry of the expanded particles flows to enter the dehydration unit 10e of the cis-arrangement unit C1 (second washing step).

Then, the slurry of the expanded particles 5 passes through the cis-arrangement unit C1 (the dehydration units 10e and 10f), the cis-arrangement unit C2 (the dehydration units 10g and 10h), and the trans-arrangement unit T3 (the dehydration units 10i and 10j) in order. While the slurry of the expanded particles is passing through these units, the liquid component is removed therefrom (dehydration step). Then, a resultant is discharged from the outlet 12j (corresponding to the outlet 12j of the transporting tube 1j of the dehydration unit 10j) of the trans-arrangement unit T.

### [Embodiment 4]

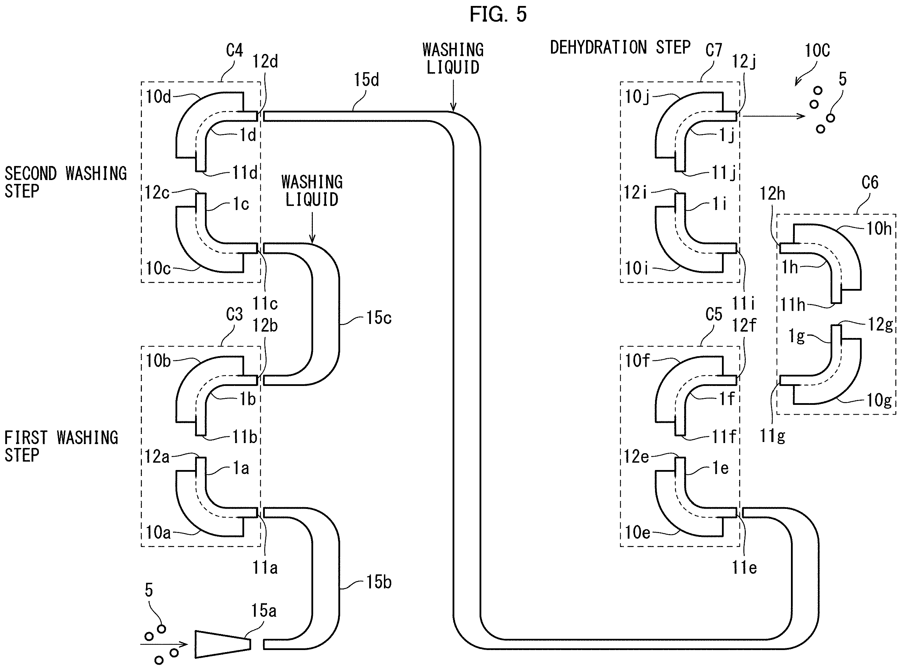

The following will describe another embodiment of the present invention. For convenience of description, members having functions identical to those described in Embodiments 1 to 3 are assigned identical referential numerals, and their descriptions are omitted here. Fig. 5 is a cross-sectional view schematically illustrating a configuration of a dehydration device 10C for dehydrating expanded particles in accordance with Embodiment 4.

The dehydration device 10C in accordance with Embodiment 4 does not include a trans-arrangement unit. On this point, the dehydration device 10C differs from the dehydration device of Embodiment 3. As shown in Fig. 5, the dehydration device 10C includes cis-arrangement units C3 to C7 and washing tubes 15c and 15d. The cis-arrangement unit C3 is constituted by dehydration units 10a and 10b. The cis-arrangement unit C4 is constituted by dehydration units 10c and 10d. The cis-arrangement unit C5 is constituted by dehydration units 10e and 10f. The cis-arrangement unit C6 is constituted by dehydration units 10g and 10h. The cis-arrangement unit C7 is constituted by dehydration units 10i and 10j.

In the dehydration device 10C, the cis-arrangement unit C3 is used in a first washing step, and the cis-arrangement unit C4 is used in a second washing step. The cis-arrangement units C5 to C7 are used in a dehydration step.

The cis-arrangement units C3 and C5 are disposed at a substantially identical height. The cis-arrangement unit C4 is disposed higher than the cis-arrangement unit C3. The cis-arrangement unit C7 is disposed higher than the cis-arrangement unit C5. The cis-arrangement unit C6 is disposed between the cis-arrangement unit C5 and the cis-arrangement unit C7 in an up-down direction (i.e., a vertical direction). In the vertical direction, an inlet 11g of the cis-arrangement unit C6 is positioned at a location substantially identical to that of an outlet 12f of the cis-arrangement unit C5, and an outlet 12h of the cis-arrangement unit C6 is positioned at a location substantially identical to that of an inlet 11i of the cis-arrangement unit C7.

The washing tube 15c is connected to an outlet 12b of the cis-arrangement unit C3. The washing tube 15c connects the outlet 12b of the cis-arrangement unit C3 and an inlet 11c of the cis-arrangement unit C4 to each other. The washing tube 15d connects an outlet 12d of the cis-arrangement unit C4 and an inlet 11e of the cis-arrangement unit C5 to each other.

The outlet 12f of the cis-arrangement unit C5 is connected to the inlet 11g of the cis-arrangement unit C6 via a non-illustrated connection tube. The outlet 12h of the cis-arrangement unit C6 is connected to the inlet 11i of the cis-arrangement unit C7 via a non-illustrated connection tube.

In the dehydration device 10C, a washing liquid for expanded particles 5 is introduced into the washing tubes 15c and 15d. A slurry of the expanded particles 5 passes through the cis-arrangement unit C3, so that the liquid component is partially removed therefrom. While being cleaned in the washing tube 15c, the slurry of the expanded particles flows to enter the dehydration unit 10c of the cis-arrangement unit C4 (first washing step). Next, the slurry of the expanded particles 5 passes through the cis-arrangement unit C4, so that the liquid component is partially removed therefrom. While being cleaned in the washing tube 15d, the slurry of the expanded particles flows to enter the dehydration unit 10e of the cis-arrangement unit C5 (second washing step).

Then, the slurry of the expanded particles 5 passes through the cis-arrangement units C5 to C7 in order. While the slurry of the expanded particles is passing through these units, the liquid component is removed therefrom (dehydration step). Then, a resultant is discharged from the outlet 12j of the cis-arrangement unit C7.

### (Method for producing expanded particles)

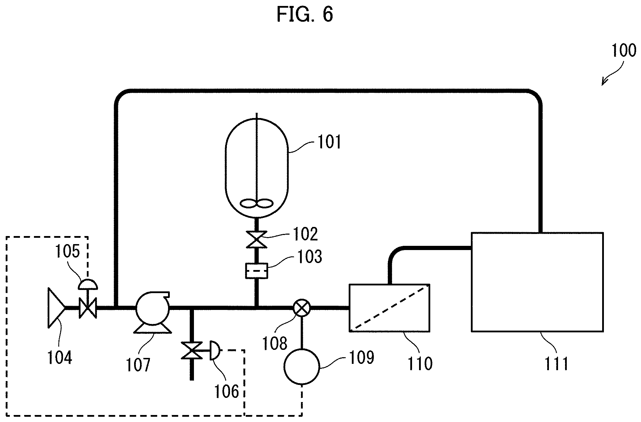

A method for producing expanded particles in accordance with Embodiments 1 to 4 includes the step of carrying out the above-described method for dehydrating the expanded particles. With reference to Fig. 6, the following will explain the method for producing the expanded particles. Fig. 6 is a view schematically illustrating a configuration of a device for producing expanded particles 5 employed in Embodiments 1 to 4. The following description deals with, as one example, a method for producing thermoplastic resin expanded particles as the expanded particles. However, the expanded particles employed in an embodiment of the present invention may be any publicly-known ones, and are not limited to the thermoplastic resin expanded particles.

As shown in Fig. 6, a production device 100 for the producing expanded particles includes a pressure-resistant vessel 101, a delivery valve 102, a nozzle 103, a filter 104, an outside air intake amount adjustment valve 105, a vapor blowing amount adjustment valve 106, an expanded particle transporting blower 107, a thermometer 108, a controller 109, a separator 110, and an expanded particle storage tank 111.

The pressure-resistant vessel 101 is a vessel used to produce expanded particles by the pressure-release expansion method. The expanded particles are produced in the following manner. That is, first, an aqueous dispersion containing thermoplastic resin particles, an inorganic dispersion agent, and a dispersion auxiliary and a volatile blowing agent are put into the pressure-resistant vessel 101 together with water. Thereafter, the pressure-resistant vessel 101 is heated so that the inside of the pressure-resistant vessel 101 is maintained at a fixed pressure and at a fixed temperature and the blowing agent is impregnated in the resin particles, and then the resin particles are released to a low pressure atmosphere (pressure-release expansion method). Then, the product thus released is further subjected to drying.

The pressure-resistant vessel 101, the expanded particle transporting blower 107, the separator 110, and the expanded particle storage tank 111 are connected to each other via a transporting tube. The expanded particle transporting blower 107 is a member for taking outside air and sending the air into the transporting tube connected to the separator 110 and the expanded particle storage tank 111, and is configured to transport the expanded particles, together with the air, to the separator 110 and the expanded particle storage tank 111.

In the production device 100, a part of the transporting tube which part extends between the expanded particle transporting blower 107 and the separator 110 has a branched transporting tube, to which the pressure-resistant vessel 101 is connected. The branched transporting tube is provided with the delivery valve 102 and the nozzle 103. The part of the transporting tube via which part the expanded particle transporting blower 107 and the separator 110 are connected to each other is provided with the thermometer 108. The thermometer 108 is provided to measure the temperature of the part of the transporting tube via which part the expanded particles are transported from an outlet of the nozzle 103 to the expanded particle storage tank 112 and a range of the equipment corresponding thereto (hereinafter, such a range may be simply referred to as an expansion chamber, occasionally).

The production device 100 is configured to supply vapor and outside air to the expanded particle storage tank 111. The filter 104 is provided to filter the outside air to be taken into the production device 100. The amount of the vapor to be supplied to the expanded particle storage tank 111 is controlled by the degree of valve opening of the vapor blowing amount adjustment valve 106. The amount of the outside air to be taken into the production device 100 is controlled by the degree of valve opening of the outside air intake amount adjustment valve 105. The controller 109 is a member for controlling the degree of valve opening of the outside air intake amount adjustment valve 105 or the vapor blowing amount adjustment valve 106. In the production device 100, the outside air intake amount adjustment valve 105 and the vapor blowing amount adjustment valve 106 are controlled by the controller 109, so that the amount of the outside air and the amount of the vapor to be supplied into the expanded particle storage tank 111 are controlled. Consequently, the temperature of the part of the transporting tube via which part the expanded particles are transported from the outlet of the nozzle 103 to the expanded particle storage tank 112 and the range of the equipment corresponding thereto is adjusted to have a desired temperature.

Next, the following will describe the method for producing the expanded particles with use of the production device 100. First, thermoplastic resin particles, an inorganic gas as a blowing agent (e.g., carbon dioxide, nitrogen, and air), water, a dispersion agent, and a dispersion auxiliary such as a surfactant (if necessary) are introduced into the pressure-resistant vessel 101. Next, the pressure-resistant vessel 101 is heated so that the mixture in the pressure-resistant vessel 101 is adjusted to have a given temperature, and then the pressure inside the pressure-resistant vessel 101 is adjusted to a given pressure. Consequently, the blowing agent is impregnated in the thermoplastic resin particles. Thereafter, the delivery valve 102 is opened so that a resultant is released into the expansion chamber, which has a pressure lower than the pressure inside the pressure-resistant vessel 101, through the nozzle 103 (pressure-release expansion method). Consequently, the thermoplastic resin particles are expanded, so that expanded particles are obtained. Before the thermoplastic resin particles are released from the pressure-resistant vessel 101, the temperature of the expansion chamber is adjusted to a desired temperature according to the expansion ratio, the quality, and/or the like of the target thermoplastic resin expanded particles.

The expanded particles released from the pressure-resistant vessel 101 through the nozzle 103 are in the state of a slurry in which the expanded particles are mixed with a liquid component, such as the dispersion agent. The slurry of the expanded particles is transported to the separator 110 by the air introduced by the expanded particle transporting blower 107. Then, the liquid component is separated in the separator 110, and a resultant is sent to the expanded particle storage tank 111. Each of the dehydration devices 10 and 10A to 10C in accordance with Embodiments 1 to 4 is applicable to the separator 110 in the production device 100, for example.

Here, a base resin of the thermoplastic resin particles in accordance with an embodiment of the present invention is not limited to any particular one, provided that it is a generally-known expandable thermoplastic resin. Examples of the thermoplastic resin encompass a polyolefin resin, a polyester resin, a polystyrene resin, a polyphenylene ether resin, a polyamide resin, and a mixture thereof. The thermoplastic resin is preferably the polyolefin resin or the polyester resin. The polyolefin resin refers to a resin containing an olefin unit by not less than 50 weight%, preferably not less than 80 weight%, more preferably not less than 90 weight%. Specific examples of the polyolefin resin encompass: polyethylenes such as high-density polyethylene, medium-density polyethylene, low-density polyethylene, linear low-density polyethylene, and low-molecular-weight polyethylene; propylene homopolymer; α-olefin-propylene random copolymers such as an ethylene-propylene random copolymer, an ethylene-propylene-1-butene random copolymer, and a propylene-1-butene random copolymer and polypropylenes such as an α-olefin-propylene block copolymer; and other polyolefin homopolymers such as a propylene homopolymer and polybutene. One kind selected from these may be employed alone, or two or more kinds may be used in combination. Examples of the polyester resin encompass an aliphatic polyester resin, an aromatic polyester resin, and an aliphatic and aromatic polyester resin. Specific examples of the polyester resin encompass polyhydroxy alkanoate, polybutylene succinate (PBS), poly(butylene adipate-co-butylene terephthalate) (PBAT), and polyethylene terephthalate (PET). Polyhydroxy alkanoate is at least one kind selected from poly(3-hydroxy butyrate-co-3-hydroxy hexanoate) (PHBH), poly(3-hydroxy butyrate) (P3HB), poly(3-hydroxy butyrate-co-3-hydroxy valerate) (PHBV), poly(3-hydroxy butyrate-co-4-hydroxy butyrate) (P3HB4HB), poly(3-hydroxy butyrate-co-3-hydroxy octanoate), and poly(3-hydroxy butyrate-co-3-hydroxy octadecanoate).

Of these, the ethylene-propylene random copolymer, the ethylene-propylene-1-butene random copolymer, and the propylene-1-butene random copolymer are preferable, since each of these copolymers exhibits favorable expandability when employed as a base resin for producing expanded particles.

In a case where the base resin of the thermoplastic resin particles used in an embodiment of the present invention is the polyolefin resin, the base resin may contain not only the polyolefin resin but also an additional thermoplastic resin(s) in a range with which the characteristics of the polyolefin resin are not impaired. The additional thermoplastic resin may be, for example, polystyrene, polybutene, or ionomer.

Ordinarily, in order to facilitate production of expanded particles, it is preferable to preliminarily process the thermoplastic resin by melting the thermoplastic resin with, e.g., an extruder, a kneader, a Banbury mixer, or a roller, and by processing the thermoplastic resin into resin particles having a cylindrical shape, an elliptical shape, a spherical shape, a cubic shape, a cuboid shape, or the like. Note that the resin particles may also be expressed as pellets.

A single particle of the thermoplastic resin particles employed in an embodiment of the present invention preferably has a weight of 0.1 mg to 30 mg, more preferably 0.3 mg to 10 mg.

In a case where an additive is to be added to the thermoplastic resin, it is preferable to mix the thermoplastic resin and the additive with a blender and/or the like prior to production of the thermoplastic resin particles. One specific example of the additive is a cell nucleating agent (also simply referred to as a nucleating agent). In a case where a hydrocarbon-based blowing agent such as propane, butane, pentane, or hexane is used, an inorganic nucleating agent such as talc, silica, calcium carbonate, kaolin, titanium oxide, bentonite, or barium sulfate is generally used as the nucleating agent. The amount of the cell nucleating agent to be added varies depending on the type of the thermoplastic resin to be used and the type of the cell nucleating agent to be used, and therefore cannot be unconditionally defined. Preferably, the amount of the cell nucleating agent to be added is preferably not less than about 0.001 parts by weight and not more than about 2 parts by weight, relative to 100 parts by weight of the thermoplastic resin.

In a case where the inorganic blowing agent such as air, nitrogen, carbon dioxide, or water is used, it is preferable to use the inorganic nucleating agent and/or a hydrophilic substance. In a case where water is used as a dispersion medium of an aqueous dispersion, the water is impregnated in the thermoplastic resin, and the water thus impregnated works as a blowing agent alone or in combination with other blowing agent(s).

The hydrophilic substance works to increase the amount of the water to be impregnated in the thermoplastic resin. Specific examples of the hydrophilic substance encompass: inorganic substances such as sodium chloride, calcium chloride, magnesium chloride, borax, and zinc borate; and organic substances such as glycerin, melamine, isocyanuric acid, and a melamine-isocyanuric acid condensate; polyether such as polyethylene glycol or polyethylene oxide, an addition product obtained by adding polyether to polypropylene or the like, and a polymer alloy thereof; polymers such as an alkali metal salt of an ethylene-(meth)acrylic acid copolymer, an alkali metal salt of a butadiene-(meth)acrylic acid copolymer, an alkali metal salt of a carboxylated nitrile rubber, an alkali metal salt of an isobutylene-maleic anhydride copolymer, and an alkali metal salt of a poly(meth)acrylic acid. One kind selected from these hydrophilic substances may be used alone, or two or more kinds may be used in combination.

The amount of the hydrophilic substance to be added is preferably not less than 0.005 parts by weight and not more than 2 parts by weight, more preferably not less than 0.005 parts by weight and not more than 1 part by weight, relative to 100 parts by weight of the thermoplastic resin. By appropriately selecting the type and the amount of the hydrophilic substance, it is possible to adjust the average cell diameter of the thermoplastic resin expanded particles.

In addition, in production of the thermoplastic resin particles, an additive such as a coloring agent, an antistatic agent, an antioxidant, a phosphorous processing stabilizer, a lactone processing stabilizer, a metal deactivator, a benzotriazole ultraviolet absorber, a benzoate light stabilizer, a hindered amine light stabilizer, a flame retardant, a flame retardant auxiliary, an acid neutralizing agent, a crystal nucleating agent, and/or an amide-based additive may be added as needed in a range with which the characteristics of the thermoplastic resin are not impaired.

As the blowing agent, a volatile hydrocarbon-based blowing agent such as propane, isobutane, butane, pentane, or hexane or an inorganic gas such as air, nitrogen, carbon dioxide, or water can be used. In a case where the inorganic gas is used, it is preferable to use carbon dioxide, since use of carbon dioxide tends to yield expanded particles having a relatively high expansion ratio. One kind selected from these blowing agents may be used alone, or two or more kinds may be used in combination.

As the aqueous dispersion medium, it is preferable to use water. A dispersion medium obtained by adding, to water, methanol, ethanol, ethylene glycol, glycerin, or the like can also be used as the aqueous dispersion agent.

The aqueous dispersion medium preferably contains a dispersion agent in order to prevent adhesion between the thermoplastic resin particles. Specific examples of the dispersion agent encompass inorganic dispersion agents such as tricalcium phosphate, trimagnesium phosphate, titanium oxide, basic magnesium carbonate, calcium carbonate, barium sulfate, kaolin, talc, and clay. Of these, tricalcium phosphate, barium sulfate, or kaolin is more preferable, since use of each of these substances makes it possible to stably disperse an aqueous dispersion containing the thermoplastic resin particles in the pressure-resistant vessel 101 even when the used amount of the substance is small.

Furthermore, it is preferable to use a dispersion auxiliary together with the dispersion agent. Specific examples of the dispersion auxiliary encompass anionic surfactants of: carboxylate type such as N-acylamino acid salt, alkyl ether carboxylate, or acylated peptide; sulfonate type such as alkyl sulfonate, alkylbenzene sulphonate, alkylnaphthalene sulphonate, or sulfosuccinate; sulfuric ester type such as an sulfonated oil, alkyl sulfate, alkyl ether sulfate, or alkyl amide sulfate; and phosphoric ester type such as alkyl phosphate, polyoxyethylene phosphate, or alkyl allyl ether sulfate. As the dispersion auxiliary, it is possible to use a polyvalent anionic polymeric surfactant such as: a maleic acid copolymer salt; a polycarboxylic-acid-type polymeric surfactant such as polyacrylate; and polystyrene sulfonate and naphthalenesulfonic acid formalin condensate salt.

The dispersion auxiliary is preferably the anionic surfactant of surfactant type, more preferably a mixture of one kind or two or more kinds selected from alkyl sulfonate and alkylbenzene sulphonate. Even more preferably, the dispersion auxiliary is alkyl sulfonate. Particularly preferably, the dispersion auxiliary is alkyl sulfonate having a C₁₀-₁₈ linear carbon chain as a hydrophobic group, since use of such alkyl sulfonate can reduce the dispersion agent adhered to the expanded particles of the thermoplastic resin.

In an embodiment of the present invention, it is particularly preferable to use, as the dispersion agent, one or more kinds selected from tricalcium phosphate, trimagnesium phosphate, barium sulfate, and kaolin in combination with n-paraffin sulfonic acid soda as the dispersion auxiliary.

The amounts of the dispersion agent and the dispersion auxiliary to be used vary depending on the types of the dispersion agent and the dispersion auxiliary or the type and the used amount of the thermoplastic resin to be used. Typically, the dispersion agent is preferably used in an amount of not less than 0.1 parts by weight and not more than 5 parts by weight, more preferably not less than 0.2 parts by weight and not more than 3 parts by weight, relative to 100 parts by weight of the aqueous dispersion medium. The dispersion auxiliary is preferably used in an amount of not less than 0.001 parts by weight and not more than 0.3 parts by weight, more preferably not less than 0.001 parts by weight and not more than 0.1 parts by weight, relative to 100 parts by weight of the aqueous dispersion medium. Generally, the thermoplastic resin particles are preferably used in an amount of not less than 20 parts by weight and not more than 100 parts by weight, relative to 100 parts by weight of the aqueous dispersion medium, in order to achieve favorable dispersibility in the aqueous dispersion medium. With such a configuration, it is possible to stably disperse the thermoplastic resin particles in the aqueous dispersion medium in the pressure-resistant vessel.

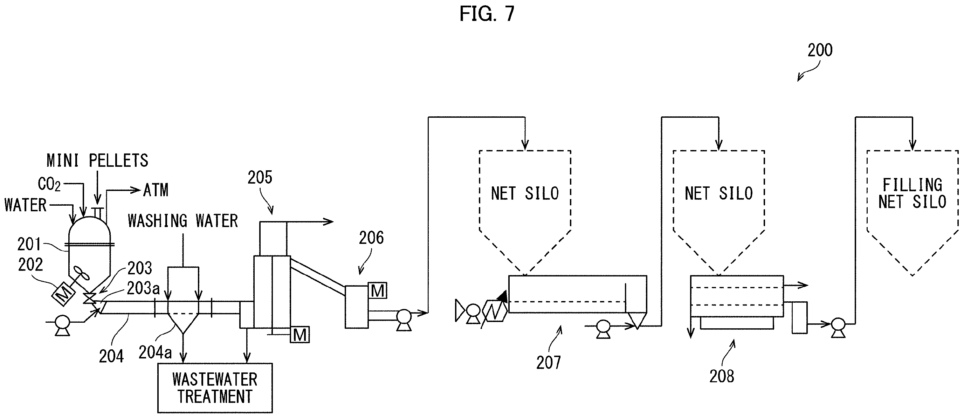

A production device for producing expanded particles to which the dehydration devices 10 and 10A to 10C in accordance with Embodiments 1 to 4 (hereinafter, such dehydration devices will be referred to as a "dehydration device in accordance with Embodiments 1 to 4") are applicable is not limited to the production device 100 shown in Fig. 6. The dehydration device in accordance with Embodiments 1 to 4 is applicable to generally-known production devices for producing expanded particles. For example, Fig. 7 is a view schematically illustrating a configuration of another production device 200 to which the dehydration device in accordance with Embodiments 1 to 4 is applicable. The dehydration device in accordance with Embodiments 1 to 4 is applicable not only to the production device 200 but also to the device configured as disclosed in Chinese Utility Model No. CN 205272478 U.

As shown in Fig. 7, the production device 200 for the expanded particles includes a pressure-resistant vessel 201, a stirrer 202 disposed in a lower part (bottom part) of the vessel (hereinafter, this stirrer will be referred to as a "lower stirrer 202"), a flush valve 203, an expansion tube 204, washing piping 204a, a centrifugal dehydrator 205, a crusher 206, a fluid dryer 207, and a shifter 208.

The pressure-resistant vessel 201 is a vessel used to produce expanded particles by the pressure-release expansion method, and has a lower part having a conical shape. The lower stirrer 202 is a device for mixing and stirring materials put into the pressure-resistant vessel 201. The pressure-resistant vessel 201 has, in its lowermost part, a slurry outlet to which the flush valve 203 is directly provided. The expansion tube 204 is a transporting tube through which the expanded particles are transported to the centrifugal dehydrator 205. The expansion tube 204 is designed so that transporting wind generated by a blower or the like flows therethrough. The expanded particles in the expansion tube 204 are transported to the centrifugal dehydrator 205 by the transporting wind. The washing piping 204a is provided at a location downstream of the expansion tube 204. The washing piping 204a is configured to receive washing water for washing the expanded particles supplied thereto and to discharge the washing water thus supplied. At a location downstream of the centrifugal dehydrator 205, the crusher 206 for crushing the expanded particles adhered to each other is provided. At a location downstream of the crusher 206, the fluid dryer 207 and the shifter 208 are disposed in this order. Net silos for storing the expanded particles are disposed such that one net silo resides at a location between the crusher 206 and the fluid dryer 207, another net silo resides at a location between the fluid dryer 207 and the shifter 208, and the other net silo resides at a location downstream of the shifter 208.

To the pressure-resistant vessel 201, mini pellets including the thermoplastic resin particles, the inorganic dispersing agent, and the dispersion auxiliary as well as CO₂ as the blowing agent are introduced together with water. Then, the pressure-resistant vessel 201 is heated so that the temperature of the mixture in the pressure-resistant vessel 201 is adjusted to a given temperature, and then the pressure inside the pressure-resistant vessel 101 is adjusted to a given pressure. Consequently, the blowing agent is impregnated in the thermoplastic resin particles in the pressure-resistant vessel 201. The flush valve 203 disposed in the lower part of the pressure-resistant vessel 201 is configured to be connectable to the expansion tube 204. For example, the flush valve 203 may include, in its body, a spindle-shaped connection part 203a connected to the expansion tube 204. As a result of opening of the flush valve 203, the thermoplastic resin particles in which the blowing agent is impregnated are released to the connection part 203a, which has a pressure lower than the pressure inside the pressure-resistant vessel 201, and are expanded therein, so that expanded particles are obtained (pressure-release expansion method). The expanded particles are caused to flow from the connection part 203a into the expansion tube 204 by the transporting wind.

Here, the discharge valve disposed between the pressure-resistant vessel 201 and the expansion tube 204 is not limited to the flush valve 203, and the discharge valve only needs to be a valve with which the pressure-release expansion can be carried out and the amount of the expanded particles to be discharged can be adjusted. The discharge valve may be a generally-known valve. The discharge valve may alternatively be a ball valve, a tank valve, or a Y-shaped flush valve. In a case where the discharge valve is the flush valve 203, the flush valve 203 includes a conic trapezoid valve element at the tip inside thereof. The flush valve 203 is configured such that the valve element is manually or automatically lowered from the valve body. By changing the distance of lowering of the valve element, the degree of valve opening is adjusted. The amount of the expanded particles to be discharged is adjusted by the area of an annular clearance between the valve element and the valve body. In order to eliminate a dead space between the pressure-resistant vessel 201 and the flush valve 203, the flush valve 203 is desirably configured such that the distal end of the valve element is extendable toward the pressure-resistant vessel 201 to reach the bottom surface of the pressure-resistant vessel 201. Upon opening of the flush valve 203, a certain amount of the expanded particles flow to the expansion tube 204 for a certain period of time according to the pressure-release expansion method. Then, when the mixture in the pressure-resistant vessel 201 disappears, the supply of the expanded particles to the expansion tube 204 stops, so that the flush valve is closed.

The expanded particles discharged from the pressure-resistant vessel 201 to the expansion tube 204 are cleaned in the washing piping 204a to which the washing water is added from the above, and then are subject to centrifugal dehydration with the centrifugal dehydrator 205. The washing piping 204a has a lower part whose inner surface is provided with a mesh. The lower part of the washing piping 204a has a shape (e.g., an inverted triangle) that facilitates discharge of the washing water. After the washing, the expanded particles dehydrated in the centrifugal dehydrator 205 pass through the crusher 206. In the crusher 206, the expanded particles having been blocked are crushed and separated.

The dehydration device in accordance with Embodiments 1 to 4 may be replaced with the centrifugal dehydrator 205 in the production device 200. Alternatively, the production device 200 may employ the dehydration device in accordance with Embodiments 1 to 4 and the centrifugal dehydrator 205 in combination. With the configuration employing the dehydration device in accordance with Embodiments 1 to 4 and the centrifugal dehydrator in combination, the dehydration device in accordance with Embodiments 1 to 4 can be disposed at a location either upstream or downstream of the centrifugal dehydrator 205.

The expanded particles having passed through the crusher 206 are temporarily stored in the net silo, and are then supplied to the fluid dryer 207. In the fluid dryer 207, the expanded particles are continuously dried while being caused to flow by heated hot air. The expanded particles having passed through the fluid dryer 207 and having been dried are temporarily stored in the net silo, and then pass through the shifter 208. The expanded particles are stored in the net silo, and then are shipped as a product.

The lower stirrer 202 is attached to a side wall of the conical-shaped lower part of the pressure-resistant vessel 201. Note that a shaft sealing device of the lower stirrer 202 is not limited to any particular one, and may be a generally-known shaft sealing device. As the shaft sealing device, a mechanical seal is generally employed. The lower stirrer 202 may not include the shaft sealing device. In this case, shaft-sealing of the lower stirrer 202 may be achieved by a non-leakage, non-sealing method employing a strong magnet that is embedded. In the production device 200 or the production device 200 employing the dehydration device in accordance with Embodiments 1 to 4, the pressure-resistant vessel 201 is not limited to the vessel having the conical-shaped lower part. Alternatively, for example, the pressure-resistant vessel 201 may be a vessel having a lower part having a semi-elliptic shape. The stirrer used to stir the content in the pressure-resistant vessel 201 is not limited to the lower stirrer 202, which has an electric motor for driving a stirring blade disposed in the lower part of the pressure-resistant vessel 201. For example, the stirrer may be a hanging-type stirrer having an electric motor disposed in an upper part of the pressure-resistant vessel 201 and a stirring blade disposed in a lower part of the inside of the pressure-resistant vessel 201.

The stirrer may employ a generally-known stirring form. Examples of the stirring form encompass the form disclosed in Japanese Patent Application Publication, Tokukaishou, No. 62-18214 (1987) and the form disclosed in International Publication No. WO 2018/008445.

In the production device 200 or the production device 200 employing the dehydration device in accordance with Embodiments 1 to 4, the crusher 206 is a device provided according to the characteristics of the expanded particles to be produced. The crusher includes a rotational shaft provided with multi-stage stirring blades and a metal mesh or a punching metal surrounding the stirring blades. The stirring blades are not limited to any particular type, and may be retreat paddle blades. The metal mesh or the punching metal is not limited to any particular type, provided that it has multiple holes larger than the diameter of the expanded particles. The expanded particles in which adhesion (blocking) has been broken with the stirring blades are discharged through the multiple holes in the metal mesh or the punching metal. The production device 200 or the production device 200 employing the dehydration device in accordance with Embodiments 1 to 4 may not include the crusher 206.

The production device 200 or the production device 200 employing the dehydration device in accordance with Embodiments 1 to 4 only needs to be configured to be capable of yielding expanded particles by the pressure-release expansion according to which a mixture in the pressure-resistant vessel 201 is released to a low pressure atmosphere, and is not limited to the configuration including the flush valve 203. For example, the production device may be configured such that releasing of thermoplastic resin particles to an atmosphere having a pressure lower than that in the pressure-resistant vessel 201 for expansion of the thermoplastic resin particles may be carried out by causing the expanded particles to collide with a collision plate or a wall of the expansion tube through a throttle plate with a cylinder, which is provided to the discharge part of the pressure-resistant vessel 201 (Japanese Patent Application Publication, Tokukai, No. 2003-192820, Japanese Patent Application Publication, Tokukai, No. 2003-82148, or International Publication No. WO 2005/085337). In this case, the throttle plate with the cylinder is configured to include an orifice plate having an orifice and a cylinder provided on a surface of the orifice plate so as to surround the orifice. A part of the collision plate or wall of the expansion tube with which part the expanded particles collide may be a curved surface or a flat surface.

The present invention is not limited to the embodiments, but can be altered by a skilled person in the art within the scope of the claims. The present invention also encompasses, in its technical scope, any embodiment derived by combining technical means disclosed in differing embodiments.

Aspects of the present invention can also be expressed as follows:
As described above, a dehydration device 10 for dehydrating expanded particles in accordance with a first aspect of the present invention includes: a transporting tube 1 configured to transport a liquid mixture of expanded particles 5 (a slurry of the expanded particles 5), the transporting tube 1 having at least one curved part 2 in which the transporting tube 1 is curved; and a separating member (mesh member 3) provided to the at least one curved part 2 of the transporting tube 1, the separating member being configured to separate the expanded particles 5 and a liquid component in the liquid mixture from each other.

A dehydration device 10 for dehydrating expanded particles in accordance with a second aspect of the present invention is configured in accordance with the first aspect such that the separating member (mesh member 3) constitutes a part of a side wall (outer side wall 22) of the at least one curved part 2.

Dehydration devices 10A to 10C for dehydrating expanded particles in accordance with a third aspect of the present invention are each configured in accordance with the first or second aspect such that the at least one curved part 2 includes a plurality of curved parts 2 each provided with a separating member (mesh member 3).

A dehydration device 10A for dehydrating expanded particles in accordance with a fourth aspect of the present invention is configured in accordance with the third aspect such that the plurality of curved parts 2 each provided with the separating member (mesh member 3) are arranged so that each of the plurality of curved parts 2 constitutes a part of a spiral shape.

Production devices 100 and 200 for producing expanded particles in accordance with a fifth aspect of the present invention each include any of the dehydration devices 10A to 10C in accordance with the first to fourth aspects.

A method for dehydrating expanded particles in accordance with a sixth aspect of the present invention includes the steps of: setting a separating member (mesh member 3) to at least one curved part 2 of a transporting tube 1; and causing a liquid mixture of expanded particles 5 (a slurry of the expanded particles 5) to collide with or come into contact with the at least one curved part 2 so that the expanded particles 5 and a liquid component in the liquid mixture are separated from each other.

A method for dehydrating expanded particles in accordance with a seventh aspect of the present invention is configured in accordance with the sixth aspect such that the transporting tube 1 is disposed so that (i) the at least one curved part 2 is curved upward relative to an inlet 11 of the transporting tube 1 and (ii) an outlet 12 of the transporting tube 1 is positioned higher than the inlet 11 of the transporting tube 1, and the liquid mixture is introduced into the inlet 11 of the transporting tube 1.

A method for dehydrating expanded particles in accordance with an eighth aspect of the present invention is configured in accordance with the sixth or seventh aspect such that the at least one curved part 2 of the transporting tube 1 includes a plurality of curved parts 2a, 2b, and each of the plurality of curved parts 2a, 2b is provided with a separating member (mesh member 3).

A method for producing expanded particles in accordance with a ninth aspect of the present invention includes the step of carrying out the method for dehydrating the expanded particles in accordance with any of the sixth to eighth aspects.

### Reference Signs List

1, 1a to 1j Transporting tube
2, 2a, 2b Curved part
3 Mesh member (separating member)
5 Expanded particles
10, 10A, 10B, 10CDehydration device
11, 11a to 11i Inlet
12, 12a to 12j Outlet
21 Inner side wall
22 Outer side wall
100, 200 Production device

## Claims

1. A dehydration device for dehydrating expanded particles, comprising:
a transporting tube configured to transport a liquid mixture of expanded particles, the transporting tube having at least one curved part in which the transporting tube is curved; and
a separating member provided to said at least one curved part of the transporting tube, the separating member being configured to separate the expanded particles and a liquid component in the liquid mixture from each other.

2. The dehydration device as set forth in claim 1, wherein the separating member constitutes a part of a side wall of said at least one curved part.

3. The dehydration device as set forth in claim 1 or 2, wherein said at least one curved part comprises a plurality of curved parts each provided with a separating member.

4. The dehydration device as set forth in claim 3, wherein the plurality of curved parts each provided with the separating member are arranged so that each of the plurality of curved parts constitutes a part of a spiral shape.

5. A production device for producing expanded particles, comprising the dehydration device for dehydrating the expanded particles recited in any one of claims 1 to 4.

6. A method for dehydrating expanded particles, comprising the steps of:
setting a separating member to at least one curved part of a transporting tube, which is curved in said at least one curved part; and
causing a liquid mixture of expanded particles to collide with or come into contact with said at least one curved part so that the expanded particles and a liquid component in the liquid mixture are separated from each other.

7. The method as set forth in claim 6, wherein
the transporting tube is disposed so that (i) said at least one curved part is curved upward relative to an inlet of the transporting tube and (ii) an outlet of the transporting tube is positioned higher than the inlet of the transporting tube, and
the liquid mixture is introduced into the inlet of the transporting tube.

8. The method as set forth in claim 6 or 7, wherein
said at least one curved part of the transporting tube comprises a plurality of curved parts, and
each of the plurality of curved parts is provided with a separating member.

9. A method for producing expanded particles, comprising the step of carrying out the method for dehydrating the expanded particles recited in any one of claims 6 to 8.
